# EUROPÄISCHE PATENTANMELDUNG

(11) **EP 1 189 166 A2**
(43) Veröffentlichungstag der Anmeldung: **20.03.2002**
(21) Anmeldenummer: 01440263.0
(22) Anmeldetag: 16.08.2001
(51) Int. Cl.: G06F 17/60

(54) **Verfahren zur Durchführung eines Dienstes zur Terminverwaltung sowie Server, Teilnehmervermittlungsstelle und Endgerät hierfür**

(30) Priorität: 16.09.2000 DE 10045896
(71) Anmelder: ALCATEL, 75008 Paris (FR)
(72) Erfinder: Hägebarth, Frank, 74366 Kirchheim (DE); Schweizer, Elke, Dr., 70771 Leinfelden (DE)
(74) Vertreter: Rausch, Gabriele, Dr.

(57) **Zusammenfassung**

Die Erfindung betrifft ein Verfahren zur Durchführung eines Dienstes zur Terminverwaltung für einen angerufenen Teilnehmer eines Kommunikationsnetzes, bei welchem die Terminverwaltung mittels eines (persönlichen) elektronischen Terminkalenders erfolgt, mit den Schritten Definieren jeweils bestimmter Zeitbereiche des Terminkalenders für verschiedene Kommunikationsformen, insbesondere für Telefonate, Sprachkonferenzen, Videokonferenzen oder persönliche Treffen, und speichern dieser Information in einer (persönlichen) Kommunikationsmaske, Empfangen eines Kommunikationswunsches mit der Angabe eines Zeitwunsches oder einer gewünschten Kommunikationsform eines anrufenden Endgeräts im elektronischen Terminkalender, Ermitteln eines oder mehrerer möglicher Termine für den Kommunikationswunsch und Übermitteln an das anrufende Endgerät, Empfangen einer Bestätigung zur Wahrnehmung eines Termins des anrufenden Endgeräts und Speichern dieses Termins, sowie einen Server, eine Teilnehmer-Vermittlungsstelle und ein Endgerät hierfür.

## Beschreibung

Die Erfindung betrifft ein Verfahren zur Durchführung eines Dienstes zur Terminverwaltung nach dem Oberbegriff des Anspruchs 1, sowie einen Server eine Teilnehmer-Vermittlungseinrichtung und ein Terilnehmer-Endgerät hierfür.

Das Management des Tagesablaufes, beispielsweise bezüglich Telefonaten Sprachkonferenzen, Videokonferenzen, persönliche Treffen oder Meetings mit mehreren Beteiligten, erfordert umfangreiche Terminabsprachen. Dabe kommt es häufig zu Terminkollisionen. Diese zu beseitigen ist mit einem erheblichen Zeit- und Arbeitsaufwand verbunden, insbesondere wenn für diese Aufgaben kein personell besetztes Sekretariat zur Verfügung steht. Von besonderer Bedeutung ist hier die synchrone Kommunikation. Ein kontinuierlicher Arbeitsfluss ist nicht möglich, wenn ein ständig läutendes Telefon permanent zu Unterbrechungen zwingt.

Bekannte sogenannte Groupware-Lösungen wie Lotus Notes unterstützen die Kommunikation innerhalb von Arbeitsgruppen. Diese Lösung ist jedoch nur innerhalb von Unternehmen und bei Ausstattung der Mitarbeiter mit entsprechender Hardware und Software möglich. Zur übersichtlichen Terminplanung und -verwaltung sind außerdem im Internet oder firmeninternen Intranet verfügbare Online-Kalendarien bekannt. Einen hohen Bekanntheitsgrad hat beispielsweise der Internet-Kalender des Internet-Diensteanbieters YAHOO erreicht. Jedoch sind diese Online-Kalendarien nur mittels entsprechender Internet-Endgeräte zugänglich. Außerdem weisen diese Online-Kalendarien keine Anbindung an vorhandene Fernsprechnetze auf.

Der Erfindung liegt die Aufgabe zugrunde, ein Verfahren und Mittel zur Effektivitätssteigerung der Kommunikation innerhalb und außerhalb von Unternehmen zu schaffen.

Die Aufgabe wird durch ein Verfahren gemäß der Lehre des Anspruchs 1, sowie einen Server gemäß der Lehre des Anspruchs 8, eine Teilnehmervermittlungsstelle gemäß der Lehre des Anspruchs 11 oder ein Endgerät gemäß der Lehre gemäß der Lehre nach Anspruch 12 gelöst.

Der Dienst zur Terminverwaltung stellt eine Art elektronisches Sekretariat dar und verwaltet insbesondere die Besprechungstermine eines Mitarbeiters, wobei keine Beschränkung auf einzelne Kommunikationsformen erfolgt. Über persönliche Kommunikationsmasken spezifiziert ein Teilnehmer Zeitfenster, zu denen er für bestimmte Kommunikationsformen zur Verfügung steht. Das Festlegen der Kommunikationsmaske erfolgt durch den Anwender über ein geeignetes Endgerät. Dabei kann die Kommunikationsmaske entweder im Endgerät selber oder in einem Server, welcher mittels eines geeigneten Endgeräts angerufen wird, gespeichert sein. Über eine vorzugsweise graphische Benutzeroberfläche wird dem Anwender sein persönlicher Kalender dargestellt. Dieser Kalender ist in mehrere Bereiche unterteilt, wobei insbesondere Tage einer Woche oder Stunden eines Tages angezeigt werden. In den Kalenderbereichen lassen sich auf geeignete Weise Zeitbereiche für unterschiedliche Kommunikationsformen spezifizieren. Dabei handelt es sich beispielsweise um Telefonate, Sprachkonferenzen, Videokonferenzen, persönliche Treffen oder Meetings mit einem oder mehreren Beteiligten. So kann der Anwender beispielsweise festlegen, dass er täglich außer Samstag und Sonntag von 9.00 bis 11.00 Uhr für ankommende Telefongespräche zur Verfügung steht oder dass er an einem bestimmten Tag von 13.00 bis 18.00 Uhr Besucher empfängt oder an Meetings teilnehmen kann.

In einer weiteren Ausführung kann der Anwender für bestimmte Zeitfenster festlegen, dass bestimmte Aktionen durchgeführt oder bestimmte Information an anrufende Teilnehmer übermittelt werden soll. Er kann auch für bestimmte Zeitfenster bestimmte den Anrufern zu übermittelnde Optionen spezifizieren.

Vorteilhafte Weiterbildungen ergeben sich aus den abhängigen Ansprüchen bzw. werden nachfolgend anhand eines Ausführungsbeispiels näher beschrieben.

Im folgenden soll der Begriff Teilnehmer sowohl für eine am beschriebenen Verfahren teilnehmende Person als auch für das von der Person dazu benutzte Endgerät benutzt werden.

Ein (Teilnehmer) A kommuniziert mit einem (Teilnehmer) B. B besitzt in diesem Beispiel ein elektronisches Sekretariat.
- B richtet eine Kommunikationsmaske für ankommende Telefongespräche ein. Die Maske definiert Zeitfenster, wobei ein tägliches Zeitfenster von 9.00 bis 11.00 Uhr vorgesehen ist. Innerhalb dieses Zeitfensters nimmt der Teilnehmer B Telefonate entgegen. Außerhalb dieser Zeit sollen ankommende Gespräche auf eine Ansage mit einem Sprachmenü geschaltet werden. Das Sprachmenü soll gestatten, dass der Anrufer in dringenden Fällen trotzdem einen sofortigen Ruf zum Teilnehmer B veranlassen kann.
- A wählt gegen 17.00 Uhr an seinem Telefon die Rufnummer von B.
- Die Telekommunikationsanlage, an der B angeschlossen ist, schaltet den ankommenden Ruf automatisch auf eine Ansageeinrichtung. Diese Ansageeinrichtung teilt dem Anrufer A mit, dass B momentan nicht gestört werden möchte.
- Außerdem teilt die Ansageeinrichtung mit, dass B ein elektronisches Sekretariat besitzt, über das man sich über günstige Zeiten entsprechend der Kommunikationsmaske informieren kann. Die Ansage kann auch mitteilen, auf welche Art und Weise Termine für Meetings organisiert werden können.
- Die Ansageeinrichtung informiert über die möglichen Alternativen für die weitere Vorgehensweise von A:
   1. A kann auflegen und über ein entsprechendes Endgerät, beispielsweise einen Personal-Computer, Verbindung mit dem elektronischen Sekretariat aufnehmen.
   2. A kann durch Wahl einer bestimmten Ziffer auf seinem Telefon in einem dringenden Fall einen direkten Ruf zum Teilnehmer B veranlassen.
   3. A kann durch Wahl einer anderen Ziffer eine Ansage abhören, die ihm die Zeitfenster für die Entgegennahme von Telefongesprächen durch B mitteilt.
   4. Falls A ein Endgerät benutzt, dass dies zulässt, kann er direkt, beispielsweise durch Wahl einer bestimmten Ziffer eine Verbindung zum elektronischen Sekretariat herstellen. Dazu eignet sich vorzugsweise ein WAP-fähiges Endgerät.

Die Auswahl einer der Optionen, die mittels der Ansageeinrichtung angeboten werden, kann durch Tastenwahl oder sprachgesteuert erfolgen.
- Ist A mit dem elektronischen Sekretariat von B verbunden, erscheint auf dem Display seines Endgerätes ein Menü, über das insbesondere folgende Optionen auswählbar sind:
- Die gewünschte Kommunikationsform, nämlich Telefonat, Sprachkonferenz, Videokonferenz, persönliches Treffen, Meeting mit mehreren Beteiligten oder einer andere Kommunikationsform,
- den gewünschten Zeitpunkt, nämlich baldmöglichst, Heute um ... Uhr, Morgen, in ... Tagen, diese Woche, diesen Monat oder einen anderen Zeitpunkt,
- die erwartete Zeitdauer für die Kommunikation, nämlich 5 Minuten, 10 Minuten, 30 Minuten, 1 Stunde, ... Stunden, 1 Tag oder andere Zeitdauer und
- den Grund des Kommunikationswunsches.

Einige dieser Auswahlmöglichkeiten erfordern zusätzliche Angaben, nämlich insbesondere Ortsangaben, wenn ein persönliches Treffen oder ein Meeting an einem bestimmten Ort stattfinden soll.
- Nach Auswahl der gewünschten Optionen und Eingabe zusätzlicher Informationen werden diese Daten an ein Programm weitergeleitet, welches sich auf einem Server im Internet bzw. Intranet befindet. Dieses Programm hat Zugang zu einer Datenbank, die den Terminplan von B beherbergt.
- Das Programm ermittelt unter Berücksichtigung der eingestellten Kommunikationsmasken mindestens einen möglichen Zeitpunkt für die gewünschte Kommunikation und veranlasst die Anzeige dieser Informationen auf dem Display des Endgerätes von A.
- A bestätigt den Termin oder wählt einen Termin aus den vorgeschlagenen Terminen aus. Ebenso kann er die vorgeschlagenen Termine ablehnen. In diesem Fall wird das Programm nach einem alternativen Termin suchen.
- A beendet die Verbindung zum elektronischen Sekretariat von B.
- Handelt es sich bei der vereinbarten Kommunikationsform um elektronische Kommunikation, so werden die Parameter der Telekommunikationsanlage übergeben, die zum vereinbarten Zeitpunkt automatisch den Aufbau einer Verbindung veranlasst.

Die Ansageeinrichtung kann den Teilnehmer auch eine Internet Adresse (URL) mitteilen, über die das elektronische Sekretariat im firmeninternen Intranet oder im Internet zu erreichen ist.

Das beschriebene Dienst eignet sich auch zur Verwaltung von Meeting-Räumen, zum Verleih von Equipment und für andere Management-Aufgaben. Denkbar ist auch ein Einsatz im privaten Bereich. So ist z.B. ein Teilnehmer grundsätzlich jeden Donnerstag von 19.00 bis 22.00 Uhr nicht telefonisch erreichbar, da er in diesem Zeitraum gewöhnlich zum Bowling geht. Er richtet deshalb eine Kommunikationsmaske ein. Diese löst während des Zeitfensters von 19.00 bis 22.00 Uhr immer Donnerstags eine Aktion derart aus, dass jeder ankommende Ruf auf eine Ansage geschaltet wird. Die Ansage beinhaltet ein Sprachmenü, in der der Anrufer auswählen kann, ob er eine Nachricht hinterlassen möchte oder ob sein Ruf direkt zur Bowling-Anlage umgeleitet werden soll.
- Der Inhaber eines Online-Kalendariums verwaltet dieses über eine WEB-Seite im Intranet oder Internet, auf die er mit einem geeigneten Endgerät, beispielsweise PC, Screenphone, WAP-fähiges Mobilfunkgerät oder WAP-fähiger Organizer, zugreift. Er kann sich aktuell über alle vergebenen Termine informieren, bestimmte Termine bestätigen oder absagen oder eigene Termine hinzufügen, ändern oder löschen. Über anstehende Termine wird er kurz vor Beginn automatisch unterrichtet, falls es sich nicht um eine elektronische Kommunikationsform handelt. Dies kann z.B. durch das Versenden einer Short Message SMS an sein Mobiltelefon, durch einen Anruf mit einer entsprechenden Ansage oder durch eine e-mail erfolgen. Wird ein bereits vergebener Termin gelöscht oder geändert, erfolgt eine automatische Benachrichtigung der betroffenen Kommunikationspartner. Dies kann wiederum durch das Versenden von Short Messages SMS, durch Anrufe mit einer entsprechenden Ansage oder durch e-mail erfolgen.

Die Kommunikationsmasken und die Funktionen zur Terminverwaltung müssen nicht zwingend in einem Server gespeichert sein. Sie können auch als eigenständiges Leistungsmerkmal einer Teilnehmer-Vermittlungseinrichtung den angeschlossenen Teilnehmern zur Verfügung stehen. Ebenso ist es denkbar, die entsprechenden Funktionen in ein Endgerät zu integrieren. Gegebenenfall können jeweils zu Beginn bzw. zum Ende bestimmter Zeitfenster entsprechende Anweisungen zur Durchführung der vorgesehenen Aktionen, z.B. an die Vermittiungseinrichtung gegeben werden. Auf diese Weise können z.B. eine Rufumleitung, eine Ansage oder auch bestimmte Terminmanagement-Funktionen realisiert werden.

Die Erfindung beschränkt sich nicht auf das vorstehend angegebenen Ausführungsbeispiel. Vielmehr ist eine Anzahl von Varianten denkbar, welche die Grundidee der Erfindung beinhalten.

## Patentansprüche

1. Verfahren zur Durchführung eines Dienstes zur Terminverwaltung für einen Teilnehmer eines Kommunikationsnetzes, bei welchem die Terminverwaltung mittels eines (persönlichen) elektronischen Terminkalenders erfolgt, **dadurch gekennzeichnet, dass** folgende Schritte durchgeführt werden:
• Definieren jeweils bestimmter Zeitbereiche im elektronischen Terminkalenders für verschiedene Kommunikationsformen, insbesondere für Telefonate, Sprachkonferenzen, Videokonferenzen oder persönliche Treffen, und speichern dieser Information in einer (persönlichen) Kommunikationsmaske,
• Empfang eines Kommunikationswunsches mit der Angabe eines Zeitwunsches oder einer gewünschten Kommunikationsform eines anrufenden (Teilnehmer-) Endgeräts im elektronischen Terminkalender,
• Ermitteln eines oder mehrerer möglicher Termine für den Kommunikationswunsch und Übermitteln an das anrufende Endgerät,
• Empfang einer Bestätigung zur Wahrnehmung eines Termins des anrufenden Endgeräts und
• Speichern dieses Termins.

2. Verfahren nach Anspruch 1,
**dadurch gekennzeichnet, dass** zum Ermitteln eines oder mehrerer möglicher Termine die Daten des Kommunikationswunsches mit dem Belegungszustand des für die gewünschte Kommunikationsform vorgesehenen Zeitfensters verglichen werden und an das anrufende Endgerät eine Bestätigung des Kommunikationswunsches oder ein alternativer Terminvorschlog übermittelt wird.

3. Verfahren nach Anspruch 1,
**dadurch gekennzeichnet, dass** dann, wenn die vereinbarte Kommunikationsform eine elektronische Kommunikationsform darstellt, zum vereinbarten Zeitpunkt automatisch der Aufbau einer entsprechenden Kommunikationsverbindung veranlasst wird.

4. Verfahren nach Anspruch 1,
**dadurch gekennzeichnet, dass** das ein Endgerät des angerufenen Teilnehmers über gespeicherte Termine informiert wird.

5. Verfahren nach Anspruch 1,
**dadurch gekennzeichnet, dass** die Kommunikationsmaske die Information enthält, dass abhängig von bestimmten Ereignissen oder Zuständen, insbesondere der Anrufzeit oder einer Auswahl des anrufenden Teilnehmers aus einem Menu, ein von dem anrufenden Teilnehmer an den angerufenen Teilnehmer gerichteter Anruf entweder direkt durchgestellt oder eine Verbindung zu einer Einrichtung zur Durchführung des Dienstes zur Terminverwaltung hergestellt werden soll.

6. Verfahren nach Anspruch 1,
**dadurch gekennzeichnet, dass** der angerufene Teilnehmer auf seinen elektronischen Terminkalender mittels eines WAP-fähigen Endgerätes, oder mittels eines Internet-Endgeräts zugreifen kann.

7. Verfahren nach Anspruch 1,
**dadurch gekennzeichnet, dass** dem anrufenden Teilnehmer voreingestellte Auswahlmöglichkeiten, insbesondere bezüglich der Kommunikationsform, des gewünschten Zeitpunktes, der einzuplanenden Zeitdauer, des Grundes des Kommunikationswunsches und gegebenenfalls des Ortes, falls als Kommunikationsform persönliches Treffen gewählt wurde, vorgegeben werden.

8. Server mit elektronischem Terminkalender und Verbindungsmitteln zur Herstellung einer Kommunikationsverbindung mit einem anrufenden Teilnehmer zur Durchführung der folgenden Schritte:
• Speichern einer Kommunikationsmaske mit Zuordnungen jeweils bestimmter Zeitbereiche des Terminkalenders zu verschiedenen Kommunikationsformen,
• Empfangen eines Kommunikationswunsches mit der Angabe eines Zeitwunsches oder einer gewünschten Kommunikationsform eines anrufenden Endgeräts,
• Ermitteln eines oder mehrerer möglicher Termine für den Kommunikationswunsch und Übermitteln an das anrufende Endgerät,
• Empfangen einer Bestätigung zur Wahrnehmung eines Termins des anrufenden Endgeräts und
• Speichern dieses Termins.

9. Server nach Anspruch 8, **dadurch gekennzeichnet dass**
Zugriffsmittel zum Lesen oder Bearbeiten des elektronischen Terminkalenders und der Kommunikationsmaske des angerufenen Endgeräts vorhanden sind.

10. Server nach Anspruch 8, **dadurch gekennzeichnet dass**
Anweisungsmittel zum Anweisen einer Teilnehmer-Vermittlungseinrichtung zum Auslösen bestimmter in der Kommunikationsmaske vorgegebener Aktionen.

11. Teilnehmer-Vermittlungseinrichtung mit einem integrierten Server nach Anspruch 8.

12. Teilnehmer-Endgerät mit elektronischem Terminkalender zur Durchführung eines Dienstes zur Terminverwaltung, mit Mitteln zur Durchführung der folgenden Schritte:
• Definieren jeweils bestimmter Zeitbereiche des Terminkalenders für verschiedene Kommunikationsformen und speichern dieser Information in einer (persönlichen) Kommunikationsmaske,
• Empfang eines Kommunikationswunsches mit der Angabe eines Zeitwunsches oder einer gewünschten Kommunikationsform eines anrufenden Endgeräts,
• Ermitteln eines oder mehrerer möglicher Termine für den Kommunikationswunsch und Übermitteln an das anrufende Endgerät,
• Empfang einer Bestätigung zur Wahrnehmung eines Termins des anrufenden Endgeräts und
• Speichern dieses Termins.
